# EUROPEAN PATENT APPLICATION

(11) **EP 1 395 036 A1**
(43) Date of publication of application: **03.03.2004**
(21) Application number: 02705383.4
(22) Date of filing: 20.03.2002
(51) Int. Cl.: H04N 1/387

(54) **METHOD FOR BURYING DATA IN IMAGE, AND METHOD FOR EXTRACTING THE DATA**

(30) Priority: 07.05.2001 JP 2001135674
(71) Applicant: Techno Mathematical CO., LTD., Shinagawa-ku, Tokyo 140-0001 (JP)
(72) Inventor: TANAKA, M, c/o TECHNO MATHEMATICAL CO., LTD., Shinagawa-ku, Tokyo 140-0001 (JP)
(74) Representative: de Roquemaurel, Bruno
(86) International application number: PCT/JP2002/002662
(87) International publication number: WO 2002/091731

(57) **Abstract**

The object of the invention is to provide a method of embedding data in an image and a method of extracting the data, which methods ensures that an image in which data is embedded at the time of JPEG encoding can be decoded by a standard decoder, that the embedded data can be completely extracted at the time of decoding while an irreversible encoding method is used, and that image degradation due to embedding of data is reduced. The invention is characterized in that, at the time of embedding of data in'an image, an original image is divided into unit blocks having 8 × 8 pixels, DCT is performed on the entire frame on a block-by-block basis, each block is quantized according to a quantization table, and one bit of data is substituted for a coefficient value after quantization to embed the data, and in that run-length encoding and Huffman encoding are performed in order, and the value in the quantization table corresponding to the substituted coefficient value after the quantization is replaced with 1.

## Description

### Technical Field

The present invention relates to a method of embedding data in an image and a method of extracting the data and, more particularly, to a method which enables data to be embedded in an JPEG-encoded image and to be completely extracted at the time of decoding, and which prevents image degradation at the time of embedding and extraction of the data.

### Background Art

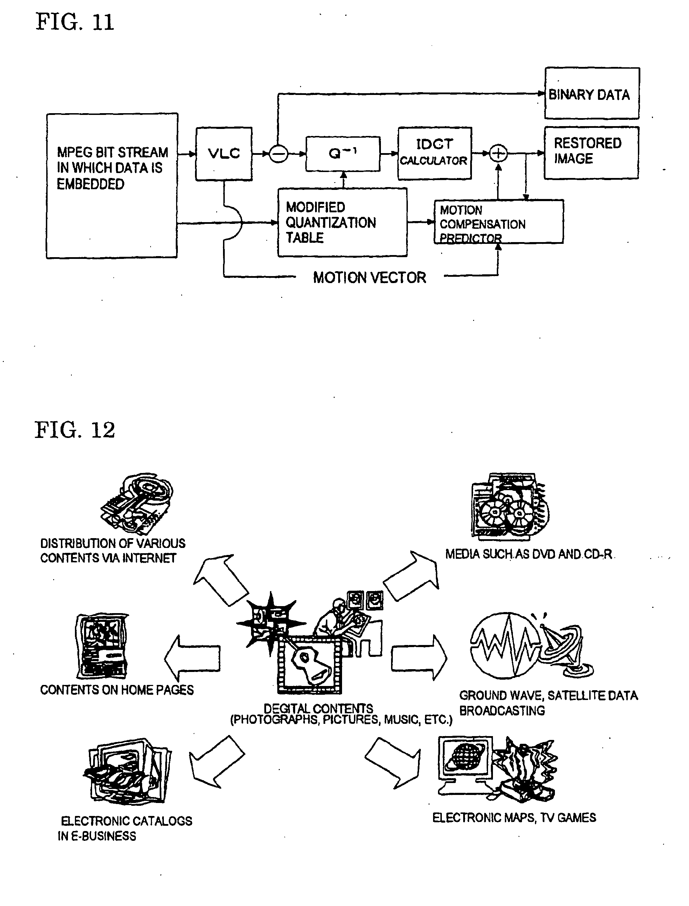

Digital contents are being presently used in various kinds of business in various forms. Figure 12 shows examples of typical areas of use of digital contents. Digital contents have the advantage of having the capability of being copied any number of times without degradation in quality even after being copied a number of times, the advantage of being easily to handle, etc. Therefore those owning digital contents have unlimited capability of business creation, depending on their ideas.

On the other hand, digital contents entail a considerable risk of being easily copied in unauthorized ways due to their capability of being copied without degradation. This unauthorized copy problem is a hindrance to implementation of digital content business. There is a need for a device for protecting digital contents as a solution of this problem.

There is a technique using an electronic watermark for embedding information indicating copyright holders in digital contents such as images and sounds in such a manner that the information cannot be perceived by other people. Electronic watermarks are for protecting digital contents from being used in unauthorized ways. If such information is embedded throughout the entire contents, not only checking as to whether or not an alteration is made but also identification of an altered portion can be performed.

Several methods of embedding and extraction of data for images used for the purpose of embedding data in JPEG-encoded images and extracting the data at the time of decoding have been proposed. Many of them have a problem that embedding of data in an image causes a degradation in the image.

### Disclosure of the Invention

The present invention has been achieved to solve the above-described problem, and an object of the present invention is to provide a method of embedding data in an image and a method of extracting the data, which methods ensures that an image in which data is embedded at the time of JPEG encoding can be decoded by a standard decoder, that the embedded data can be completely extracted at the time of decoding while an irreversible encoding method is used, and that image degradation due to embedding of data is reduced.

A method of embedding data in an image as set forth in claim 1, provided to achieve the above-described object, is characterized in that, at the time of embedding of data in an image, an original image is divided into unit blocks having 8 × 8 pixels, DCT is performed on the entire frame on a block-by-block basis, each block is quantized according to a quantization table, and one bit of data is substituted for a coefficient value after quantization to embed the data, and in that run-length encoding and Huffman encoding are performed in order, and the value in the quantization table corresponding to the substituted coefficient value after the quantization is replaced with 1.

A method of extracting data as set forth in claim 2, provided to achieve the above-described object, is characterized in that a quantization table in which 1 is further substituted for the above-described substituted coefficient value is used at the time of extraction of data.

A method of extracting data as set forth in claim 3, provided to achieve the above-described object, is a method in which data embedded in an original image by the method of embedding data as set forth in claim 1 and the original image are separated from each other by a special-purpose decoder, the method of extracting data being characterized in that coefficient values of each block are checked, the embedded data is extracted, and dequantization and IDCT are performed to decode the image.

A method of extracting data as set forth in claim 4, provided to achieve the above-described object, is a method in which data embedded in an original image by the method of embedding data as set forth in claim 1 and the original image are separated from each other by a standard decoder, the method of extracting data being characterized in that an encoded sequence is directly input to the standard decoder to obtain a decoded image; the decoded image is divided into unit blocks having 8 × 8 pixels; DCT is performed on the entire frame on a block-by-block basis; coefficient values are examined; and the embedded data is extracted.

### BRIEF DESCRIPTION OF THE DRAWINGS

Figure 1 is a diagram showing an outline of a JPEG encoding procedure in accordance with the present invention;
Figure 2 is a diagram showing the scanning order in Huffman encoding in accordance with the present invention;
Figure 3 is a diagram showing a system configuration on the encoding side in accordance of the present invention;
Figure 4 is a diagram showing an example of embedding of data in a coefficient in the highest range in accordance with the present invention;
Figure 5 is a diagram showing an example of a quantization table in accordance with the present invention;
Figure 6 is a diagram showing an example of a quantization table after substitution in accordance with the present invention;
Figure 7 is a diagram showing a system on the decoding side in accordance with the present invention;
Figure 8 is a diagram showing another system on the decoding side in accordance with the present invention;
Figure 9 is a diagram showing still another system on the decoding side in accordance with the present invention;
Figure 10 is a diagram showing a system configuration on the encoding side in the case of MPEG in accordance with the present invention;
Figure 11 is a diagram showing a system configuration on the decoding side in the case of MPEG in accordance with the present invention; and
Figure 12 is a diagram showing typical areas of use of digital contents.

### Best Mode for Carrying Out the Invention

An embodiment of the present invention will be described with reference to the accompanying drawings. A JPEG encoding procedure will first be described. The embodiment will be described with respect to a case where the image format is sequential JPEG, but the same procedure can also be used in the case of progressive JPEG.

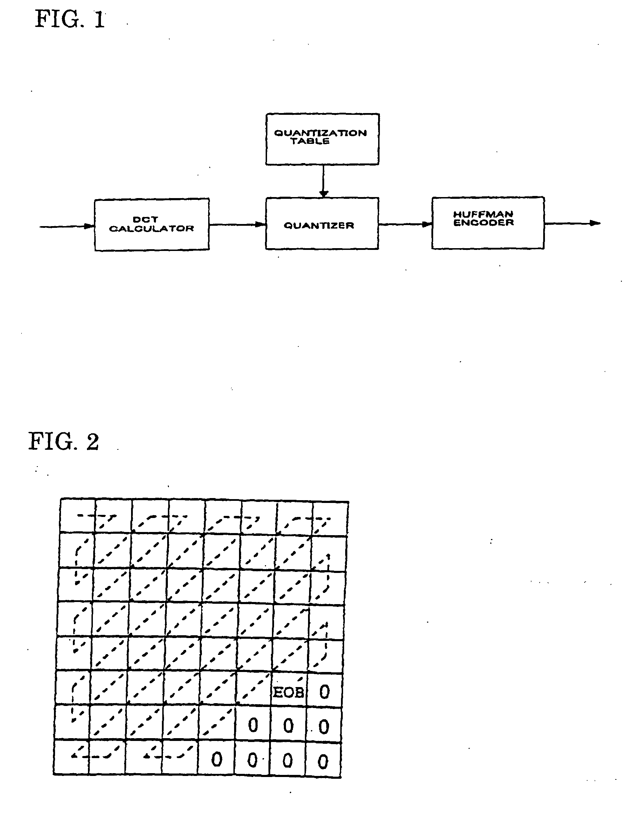

Figure 1 is a diagram showing an outline of the JPEG encoding procedure, and Figure 2 is a diagram showing the scanning order in Huffman encoding. An image to be processed is divided into 8 × 8 blocks and discrete cosine transform (hereinafter referred to as DCT), quantization using a quantization table and Huffman encoding are performed on each block. Since a DCT coefficient in a high range ordinarily becomes zero after quantization, Huffman coding is performed by zigzag scanning AC coefficients indicated by the dotted line in Figure 2. The last set of zero values of the AC coefficients zigzag scanned is not encoded but is replaced with a code EOB (End Of Block) indicating the end of the block. According to the present invention, data is embedded in this JPEG-encoded sequence.

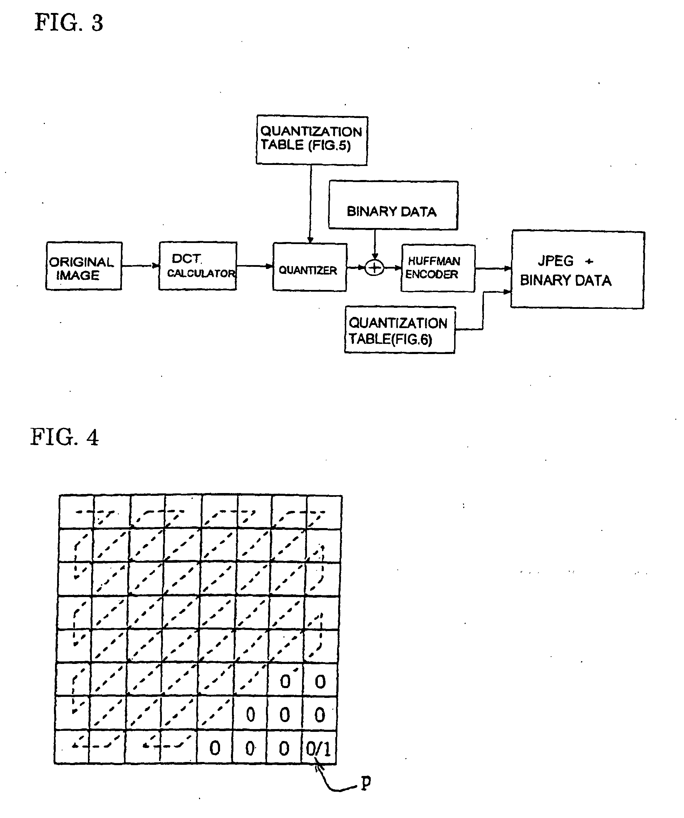

A data embedding method in the present invention will next be described. Figure 3 shows a system configuration on the encoding side in accordance of the present invention. For instance, if one bit of data at the maximum is embedded in each 8 × 8 block, data of 5280 bits at the maximum can be embedded in a 704 × 480 gray-scale image. Description will be made by representing AC coefficients arranged in zigzag scan by AC (p), in which p is 1 to 63.

According to the present invention, one bit of data is substituted for the coefficient value of the pth AC coefficient AC (p) after quantization in each block. It is assumed that p is constant and the AC coefficients at the same position in all blocks are replaced. Accordingly, the AC coefficients are examined on the decoding side before dequantization to know the embedded data. Since processing after quantization in JPEG is reversible, the embedded data can be completely restored at the time of decoding if the positions of the AC coefficients at which the data is embedded can be identified.

According to the present invention, only changes in AC coefficients are made and an encoded sequence in which data is embedded can be processed by an ordinary JPEG decoder.

A method of limiting image degradation at the time of embedding of data will next be described. The AC coefficient for embedding of data is selected with a certain degree of freedom. According to the present invention, data is embedded in the final coefficient because:
(1) a coefficient in a high range ordinarily becomes zero after quantization and image degradation due to replacement of the coefficient can be limited; and
(2) in comparison with data embedded in a coefficient in a low range, data embedded in a coefficient in a high range is visually unnoticeable when an image in which the data is embedded is decoded by an ordinary JPEG decoder.

The above-described effect (1) corresponds to the purpose of avoiding image degradation due to removal of a portion of original image data, and the above-described effect (2) corresponds to the purpose of avoiding image degradation due to addition of data which does not exist in the original image data. In the case of decoding with an ordinary JPEG decoder, embedded data exists as noise external to an image. To reduce the influence of this noise on visual sensation, a coefficient in a high range is selected.

Also, the constant p is determined in relation to the file size of the image encoded sequence which can be a cause of image degradation. Figure 4 shows an example of embedding data in the coefficient in the highest range (p = 63), which is recommended in the present invention. When data "1" is embedded in the coefficient in the highest range, an increase in code words corresponding to the amount of intermediate zero run-length coding and the final coefficient "1" is caused in comparison with the case of embedding no data. This increase in code words leads to an increase in file size of the encoded sequence. Therefore, if there is a restriction on the upper limit of the file size, a need for coarser quantization arises.

A quantization table used at the time of dequantization will next be described. Ordinarily, in a quantization table used by a JPEG encoder at the time of encoding is directly Huffman-encoded and is used on the decoding side. In the present invention, however, a quantization table different from that used at the time of encoding is Huffman-encoded in order to limit image degradation due to the existing JPEG encoder.

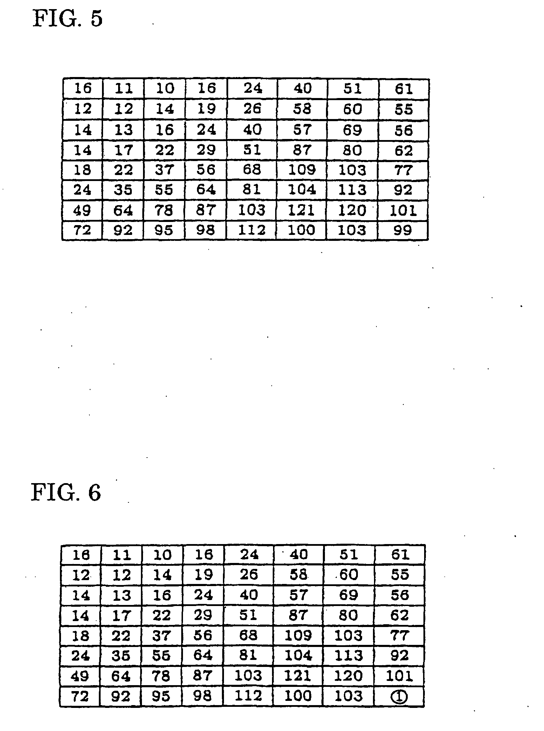

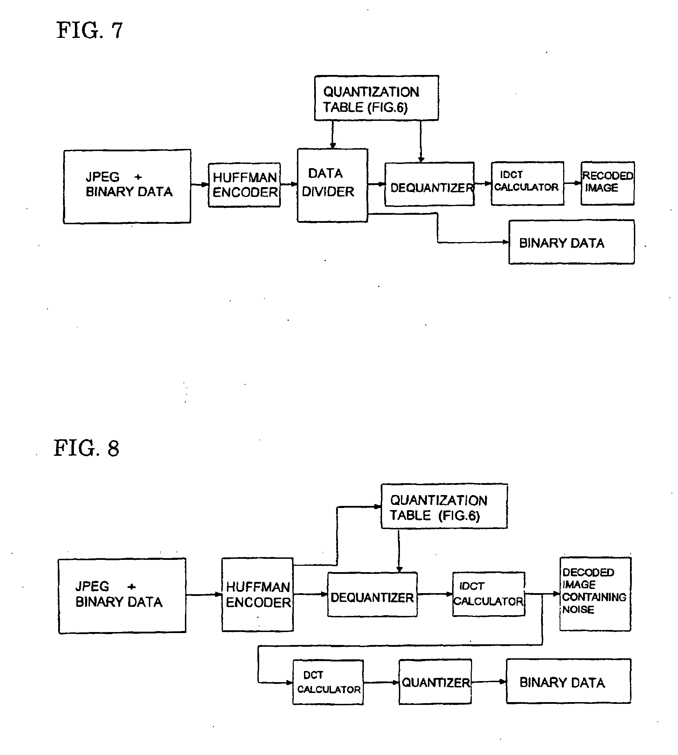

Values in a quantization table for ordinary AC coefficients are considerably large (see Figure 5), so that even a small value "1" inserted after quantization is converted into a considerably large value by dequantization, resulting in a serious degradation in a decoded image. To solve this problem, the value in the quantization table corresponding to the position (p) at which data is embedded is replaced with 1 after quantization and this value is used at the time of dequantization (see Figure 6).

When data is embedded by this method, the embeddable amount of data is the number of divided 8 × 8 blocks at the maximum. If there is a need to further embed data, a method of embedding a plurality of data items in each block, a method of embedding data in a color-difference signal, or some other method may be used. The present invention is also applicable in such case.

A method of extracting data from an encoded sequence in which the data has been embedded by the above-described method will next be described. There are two methods conceivable as this method: a method of directly extracting with a special-purpose decoder, and a method in which after decoding with a standard decoder, data is extracted from the decoded image by post processing.

In a case where a special-purpose decoder is used, there is a need to separate embedded data and an image from each other by the special-purpose decoder at the time of decoding. To do so, a process (see Figure 7) is performed in which
(1) AC (63) of each block is checked to extract embedded data, and
(2) AC (63) is returned to zero.
(3) Deguantization and Inverse Discrete Cosine
Transformation (referred to as IDCT hereinafter) are performed to decode the image.

While there is a need to prepare special-purpose decoder on the receiving side in the case of the above-described method, it is possible to perform decoding processing on an image with a standard decoder without using any special-purpose decoder and to extract embedded data from the decoded image. To do so, a process (see Figure 8) is performed in which
(1) an encoded sequence is directly input to a standard decoder to obtain a decoded image,
(2) the decoded image is divided into 8 × 8 blocks and DCT is performed thereon, and
(3) the value of AC (p) is checked to extract data.

In this case, it is necessary to perform DCT computation on the decoded image. However, the value of the AC coefficient to be computed is only one and an amount of computation corresponding to 1/64 of that for ordinary 8 x 8 points DCT suffices. Also, an existing low-priced decoder can be used to obtain the decoded image.

In this second method, extraction of embedded data is performed as post processing on the image decoded by the standard JPEG decoder and, therefore, DCT processing and IDCT processing are performed in the process of extracting the embedded data. Therefore there is a need to perform DCT and IDCT with a degree of accuracy high enough to extract 0 and 1 of the embedded data without an error. However, the inventor of the present invention has confirmed that it is virtually possible to extract data by computation with a practical accuracy such as computation with a fixed-point DSP.

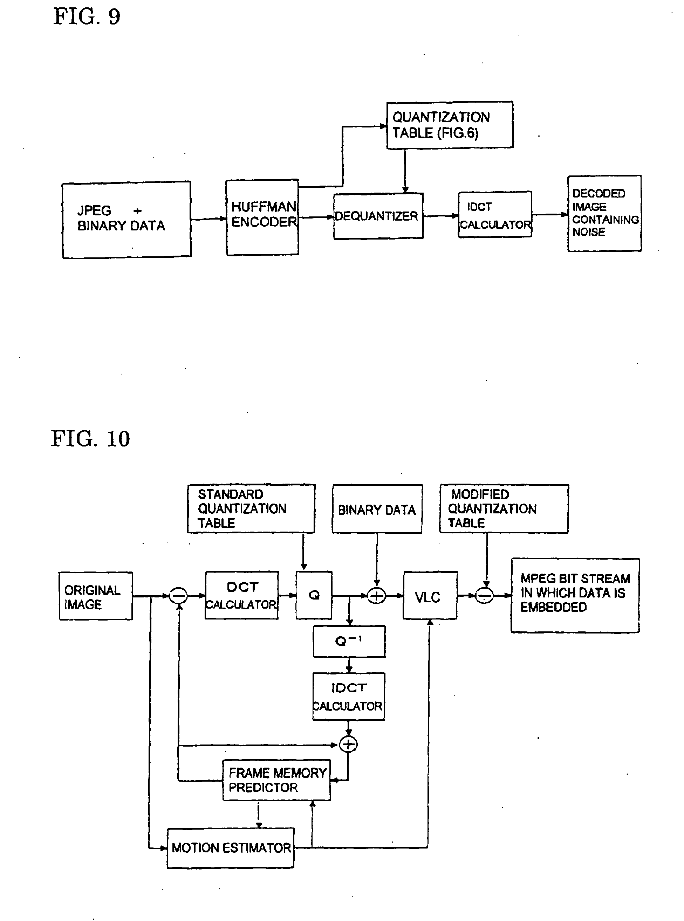

If the data is not extracted, the standard JPEG decoder can be used without any particular device (see Figure 9). In such a case, the data added to each block appears as mere noise. However, the influence of the noise on the image can be limited since the value of the corresponding AC coefficient in the quantization table is 1.

A method of embedding data in an MPEG image will next be described. A procedure for MPEG encoding will first be described. Figure 10 is a diagram schematically showing an MPEG encoding procedure. In an MPEG image, three kinds of images: I picture, P picture and B picture exist. An input image is divided into 8 × 8 pixel units, and DCT computation, quantization using a quantization table and Huffman encoding are performed on each block, as in the case of JPEG. Zigzag scan after quantization is also performed in the same manner as that in the case of JPEG. Processing on each frame is the same as that in JPEG. As this processing, therefore, the same processing as that for the above-described embedding of data in JPEG may be performed.

### Industrial Applicability

As described above, in the method of embedding data in an image and the method of extracting the embedded data in accordance with the present invention, an image in which data is embedded at the time of JPEG encoding is decoded by a standard decoder, the embedded data can be completely extracted at the time of decoding, and image degradation due to embedding of the data can be limited.

## Claims

1. A method of embedding data in an image **characterized in that**, at the time of embedding of data in an image, an original image is divided into unit blocks having 8 × 8 pixels, DCT is performed on the entire frame on a block-by-block basis, each block is quantized according to a quantization table, and one bit of data is substituted for a coefficient value after quantization to embed the data, and **in that** run-length encoding and Huffman encoding are performed in order, and the value in the quantization table corresponding to the substituted coefficient value after the quantization is replaced with 1.

2. A method of extracting data **characterized in that** a quantization table in which 1 is further substituted for the coefficient value substituted as described in claim 1 is used at the time of extraction of data.

3. A method of extracting data in which data embedded in an original image by the method of embedding data in an image as set forth in claim 1 and the original image are separated from each other by a special-purpose decoder, said method of extracting data being **characterized in that** coefficient values of each block are examined, the embedded data is extracted, and dequantization and IDCT are performed to decode the image.

4. A method of extracting data in which data embedded in an original image by the method of embedding data in an image as set forth in claim 1 and the original image are separated from each other by a standard decoder, said method of extracting data being **characterized in that** an encoded sequence is directly input to the standard decoder to obtain a decoded image; the decoded image is divided into unit blocks having 8 × 8 pixels; DCT is performed on the entire frame on a block-by-block basis; coefficient values are examined; and the embedded data is extracted.
